# EUROPEAN PATENT APPLICATION

(11) **EP 4 671 105 A1**
(43) Date of publication of application: **31.12.2025**
(21) Application number: 25184593.9
(22) Date of filing: 23.06.2025
(51) Int. Cl.: B62K 25/28, B62M 9/16, B62M 9/126, B62M 9/1248, B62K 19/30, B62M 6/40

(54) **ROUTING PULLEY TO LIMIT VIRTUAL CHAIN GROWTH IN GEARED REAR SUSPENSION BICYCLES**

(30) Priority: 26.06.2024 US 202418755497
(71) Applicant: Priority Outdoor Products, LLC, New York, NY 10013 (US)
(72) Inventor: Lemasson, Fabien Gaston, 53140 Lignières-Orgères (FR); Schwartz, Michael, Douglaston, NY 11353 (US)
(74) Representative: Rossmanith, Manfred

(57) **Abstract**

A rear suspension chain drive bicycle having a routing pulley (620; 1010) to route an untensioned portion of a chain drive (152) to a tensioned portion of the chain drive to reduce chain growth experienced thereby. The use of the routing pulley to reduce chain growth enable a derailleur (162) to accommodate addition vertical rear wheel travel. The routing pulley can be used in high pivot and low pivot rear suspension bicycles. High pivot bicycles have a rear suspension pivot point sufficiently above a crank axis (front chainring) to provide predominately rearward axle path and require an idler pulley (610) to route the chain drive. The routing pulley is located above the front chain ring (156) and for the high pivot bicycle is located close to the idler pulley.

## Description

### FIELD

The present invention relates to a chain driven rear suspension bike.

### BACKGROUND

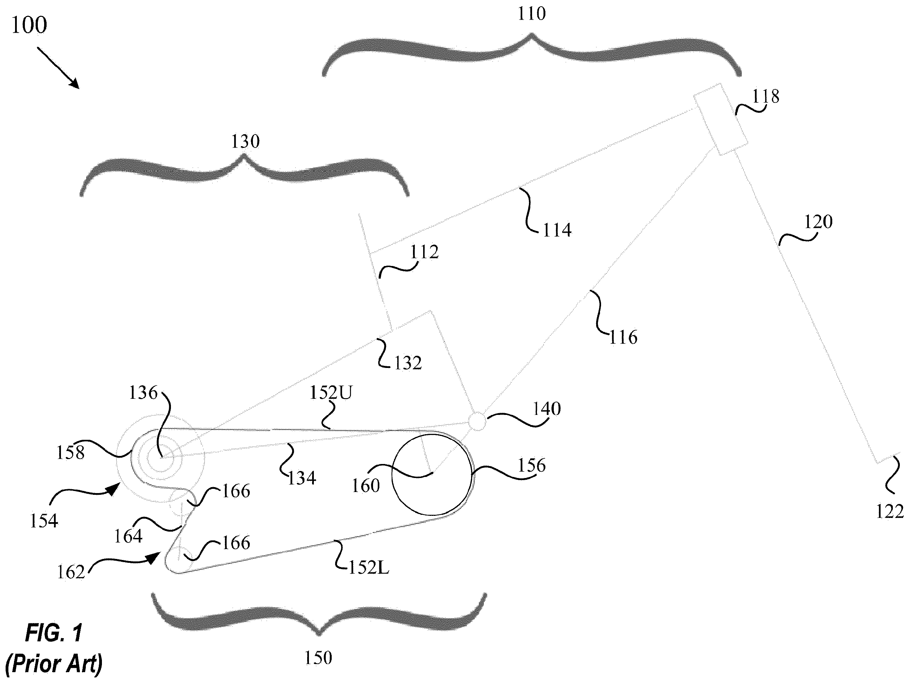

**FIG.** 1 illustrates a line diagram of an example chain driven rear suspension bicycle **100.** The bicycle **100** includes a frame made up of a front triangle **110** and a swingarm (rear triangle) **130.** The front triangle **110** includes a seat tube **112,** a top tube **114** and a down tube **116.** The top tube **114** and the down tube **116** are connected to a head tube **118** that connects to handlebars (not illustrated) and a front fork **120** that is used to secure a front wheel (not illustrated) at a front wheel axle (axis) **122.** The seat tube **112** and the down tube **116** are connected to each other via a bottom bracket shell (not separately illustrated, just shown as point of intersection between seat tube **112** and the down tube **116** for ease of illustration). The swingarm **130** may include a seatstay **132** and a chainstay **134,** or a combined chain and seatstay **134** alone in case of a mono-arm bicycle. The seatstay **132** and the chainstay **134** meet to secure a rear wheel (not illustrated) at a rear wheel axle (axis) **136.** For a mono-arm bicycle, simply the combined chain and seatstay **134** would secure the rear wheel.

The swingarm **130** may be connected to the front triangle **100** via a shock absorber or other linkages that are not illustrated for simplicity. The bicycle **100** also includes a rear suspension axis **140** (main pivot point). It should be noted that the rear suspension axis **140** could have a floating or virtual pivot, which may or may not coincide with a physical point on the bicycle frame, where the axis is found at an instant center that varies depending on the rear suspension position. In this case, the rear wheel axle **136** may be connected to either the seatstay **132** or the chainstay **134.** A floating pivot is not illustrated for ease of illustration and simplicity of explaining the basic components.

The bicycle **100** also includes a drive train **150** for providing movement thereof. The drivetrain **150** consists of a chain drive **152,** a rear cassette **154** and a front chain ring **156.** The rear cassette **154** is located on the rear wheel centered around the rear wheel axle **136.** The rear cassette **154** includes a plurality of different sized cogs **158** (to achieve different gear ratios) for receiving and routing the chain drive **152.** The front chain ring **156** is located on the bottom bracket shell. The chain drive **152** routes around the appropriate cog **158** of the rear cassette **154** and the front chainring **156.** An upper portion of the chain drive **152U** moves forward from the rear cassette **154** to the front chainring **156** and a lower portion of the chain drive **152L** moves rearward from the front chainring **156** to the rear cassette **154.** The bottom bracket shell enables a crank set and pedals (not illustrated) to be connected thereto and create a crank axis **160** (simply shown as point of intersection between seat tube **112** and the down tube **116** for ease of illustration). The crank axis **160** enables a user to pedal the bicycle **100** in order to engage the drive train **150** and move the bicycle **100.** The pedaling causes the rotation of the front chain ring **156** which will in turn rotate the chain drive **152** and the appropriate cog **158** of the rear cassette **154** and the rotation of the cog **158** causes rotation of the rear wheel. If the bicycle **100** is an electric bicycle, it will include an electric motor (not illustrated) to provide, or assist with, the movement of the bicycle **100.**

The amount of the chain drive **152** required to route around a larger cog **158** of the rear cassette **154** and the front chainring **156** is more than is required to route the chain drive **152** around a smaller cog **158.** The extra chain drive **152** required is known as virtual chain growth. To account for the chain growth, a derailleur **162** is utilized to take up the slack therein based on the cog **158** that the chain drive **152** is routed around. The derailleur **162** is a rotating member **164** onto which two idler pulleys **166** are mounted. The derailleur **162** is secured to the swingarm **130** in close proximity to the rear cassette **154** and is spring loaded to rotate the rotating member **164** and the idler pulleys **166** based on the rear cog size **158.** This allows for virtual chain growth that results from shifting the chain to different sized cogs **158** on the rear cassette **154.**

In addition to the cog **158** utilized affecting chain growth, a vertical distance that the rear wheel axis **136** travels with respect to its resting position (known as vertical rear wheel travel) may result in chain growth. That is, as the rear wheel axis **136** moves upward along a path defined by the rear suspension axis **140,** if the distance between the rear wheel axis **136** and the crank axis **160** increases, it will result in chain growth. As with most mechanical vehicle suspension systems, a bicycle **100** with rear suspension will be designed such that the swingarm **130,** as it moves throughout its range of vertical rear wheel travel, will act upon a shock absorber resulting in a displacement of a spring. This spring displacement (suspension compression) absorbs shock impulses to the bicycle **100** by converting kinetic energy into potential energy.

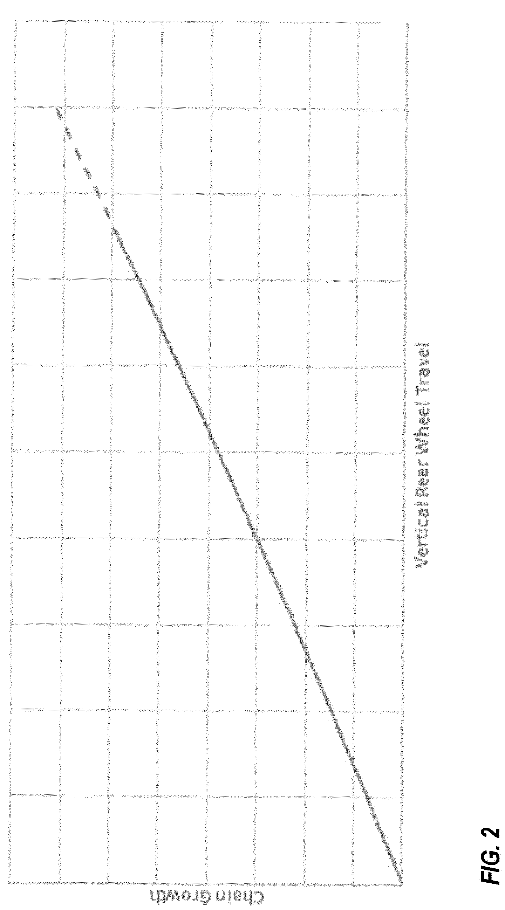

**FIG. 2** illustrates a simple graph showing that chain growth increases nearly linearly as vertical rear wheel travel increases in the case of a single pivot point bicycle. The graph does not apply in the case of a virtual or floating pivot bicycles. The amount of chain growth will depend on the frame and suspension geometry and kinematics, as well as the front and rear sprocket size combination.

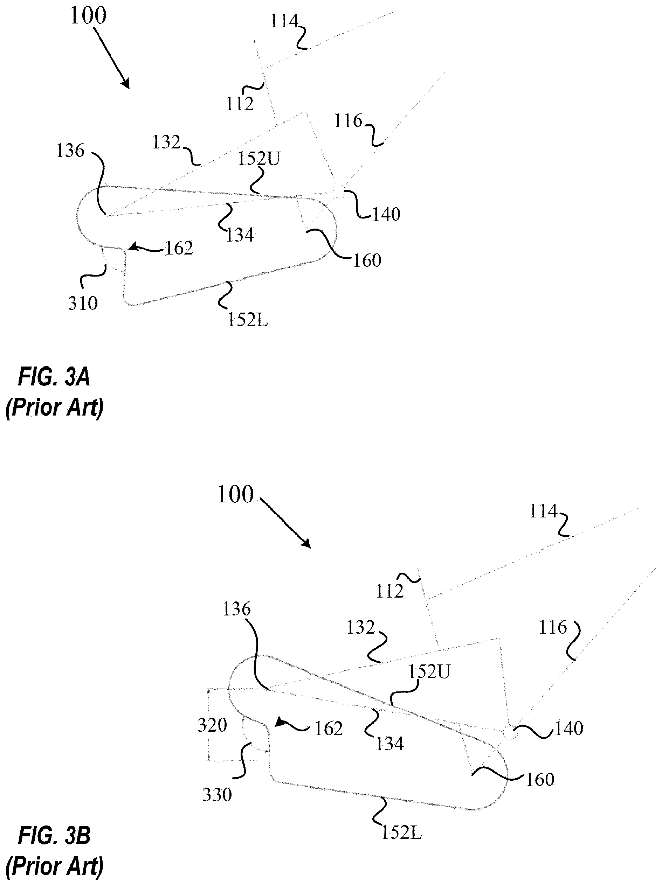

**FIGs. 3A-D** illustrate simplified line diagrams of the example chain driven rear suspension bicycle **100 of** **FIG. 1** in different gear ratios and rear suspension positions. **FIG. 3A** illustrates the bicycle **100** in a gear associated with the chain drive **152** routing around a larger cog of the rear cassette (not illustrated or identified in simplified drawing). The derailleur **162** provides an angle **310** in the routing of the chain drive **152** (driveline angle **310)** to provide the appropriate tension thereto based on the gear. **FIG. 3B** illustrates the bicycle **100** in the same gear as **FIG. 3A** but with the bicycle **100** experiencing a vertical rear wheel travel **320.** The vertical rear wheel travel **320** accounts for additional chain growth so that the driveline angle **330** is increased (angle **330** is greater than angle **310)** to provide the appropriate tension thereto based on the gear. The increased driveline angle is the result of the rear wheel axle **136** moving away from the crank axis **160** as the vertical rear wheel travel **320** increases and the fixed length of the chain drive **152.**

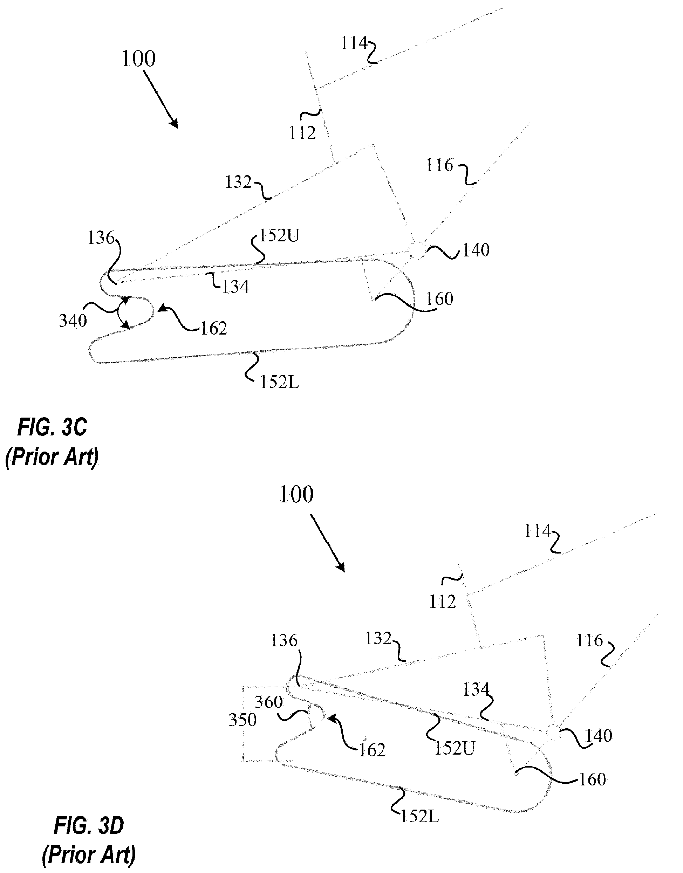

**FIG. 3C** illustrates the bicycle **100** in a gear associated with the chain drive **152** routing around a smaller cog of the rear cassette (not illustrated or identified in simplified drawing). The derailleur **162** provides a driveline angle **340** in the routing of the chain drive **152** to provide the appropriate tension thereto based on the gear. Note the angle **340** is smaller than the angle **310** since the chain drive **152** has a lesser distance to wrap around the smaller cog of the rear cassette. **FIG. 3D** illustrates the bicycle **100** in the same gear as **FIG. 3C** but with the bicycle **100** experiencing a vertical rear wheel travel **350.** The vertical rear wheel travel accounts for additional chain growth so that the driveline angle **360** is increased (angle **360** is greater than angle **340).** The increased driveline angle is the result of the rear wheel axle **136** moving away from the crank axis **160.**

**FIGs. 3A-D** clearly illustrate the derailleur **162** fulfills the dual purpose of varying external gear ratio with a cassette as well as accommodating chain growth based on vertical rear wheel travel.

As chain drives **152** are inelastic, the maximum vertical rear wheel travel will be restricted by the amount of chain growth that can be accommodated by a derailleur **162.** If the amount of chain growth surpasses what the derailleur **162** can handle, the vertical wheel travel will be limited and/or damage or failure to drivetrain **150** components of the bicycle **100** such as the chain drive **152** or the derailleur **162** will occur. Reducing the amount of chain growth would thus allow a derailleur **162** to compensate for more chain growth and thus allow for suspension designs with more vertical rear wheel travel. As such, solutions to reduce chain growth are required.

### BRIEF DESCRIPTION OF DRAWINGS

The features and advantages of the various embodiments will become apparent from the following detailed description in which:
FIG. 1 illustrates a line diagram of an example chain driven rear suspension bicycle.
FIG. 2 illustrates a simple graph showing that chain growth increases nearly linearly as vertical rear wheel travel increases for single pivot point bicycles.
FIGs. 3A-D illustrate simplified line diagrams of example chain driven rear suspension bicycle of FIG. 1 in different gear ratios and rear suspension positions.
FIG. 4 illustrates a graph showing how X location (backwards and forwards) and Y location (up and down) of the suspension pivot affect chain growth.
FIGs. 5A-B illustrate simple line diagrams of an example high pivot rear suspension bicycle in same gear but different suspension positions, according to one embodiment.
FIG. 6 illustrates a line diagram of an example chain driven high pivot point rear suspension bicycle having a routing pulley to reduce chain growth, according to one embodiment.
FIGs. 7A-B illustrate simple line diagrams of the example high pivot rear suspension bicycle of FIG. 6 in same gear but different suspension positions, according to one embodiment.
FIGs. 8A-C illustrate various different detailed views of a portion of a bicycle of FIG. 6 showing the location of the idler pulley and the routing pulley, according to one embodiment.
FIGs. 9A-B illustrate simple line diagrams of an example low pivot rear suspension bicycle in same gear but different suspension positions, according to one embodiment.
FIG. 10 illustrates a line diagram of an example chain driven low pivot point rear suspension bicycle having a routing pulley to reduce chain growth, according to one embodiment.
FIGs. 11A-B illustrate simple line diagrams of the example low pivot rear suspension bicycle of FIG. 10 in same gear but different suspension positions, according to one embodiment.

### DETAILED DESCRIPTION

As illustrated in **FIG. 1****,** most common rear suspension designs have a rear suspension axis (pivot point) **140** near the crank axis **160** and the front chainring **156.** These rear suspension designs provide an axle path that rotates in a circular direction generally towards the front of the bicycle. This generally forward rotation is to the detriment of suspension performance, as the general force vector experienced by a rear wheel when it impacts a road obstacle is in a generally rearward direction. By moving the rear suspension pivot point higher (e.g., further above the crank axis **160** and the front chainring **156),** the axle path of a bicycle becomes more rearward, better matching the direction of the force vector imparted by a rear wheel impact. A high rear suspension pivot point bicycle is one where the rear suspension pivot point is located high enough that an idler pulley is required to route the chain **152** coming from the rear cassette **154** to the front chainring **156.** Bicycles having high rear suspension pivot points are becoming popular as they provide improved suspension control and a smoother ride in rough terrain.

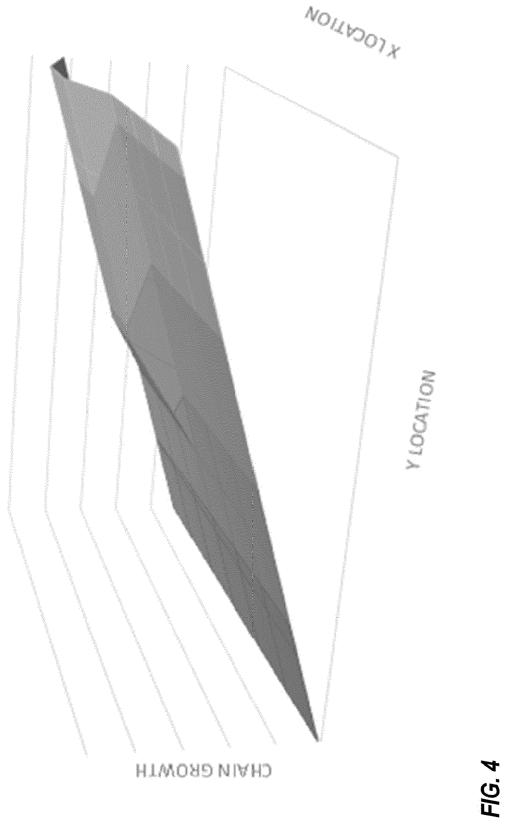

**FIG. 4** illustrates a graph showing how X location (backwards and forwards) and Y location (up and down) of the suspension pivot affect chain growth. As can be seen, the Y location has more impact. The amount of chain growth will depend on the frame and suspension geometry, as well as the front, idler and rear sprocket size combination. As such, high rear suspension pivot points increase the chain growth issue when compared to most other suspension designs.

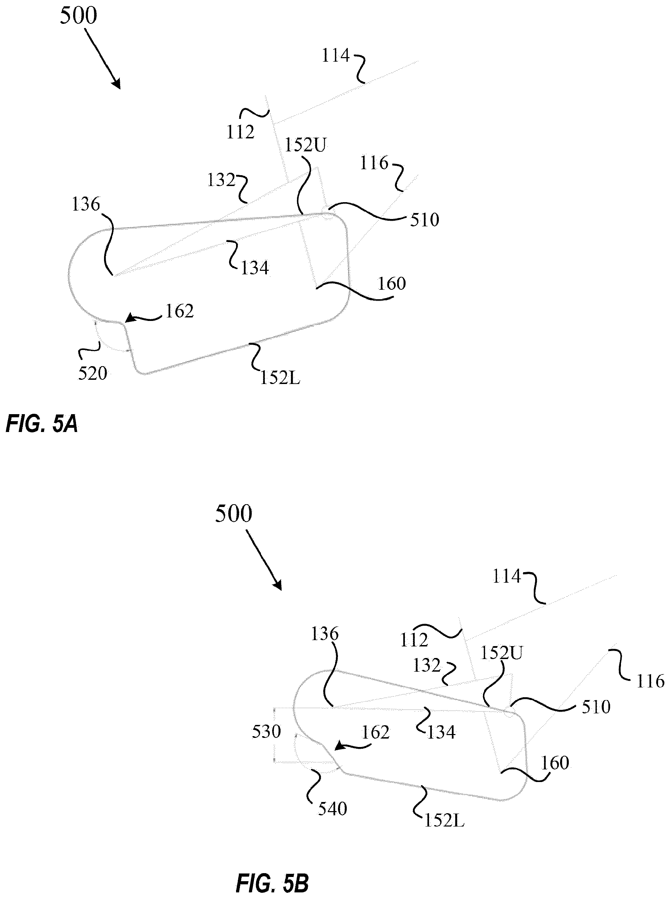

**FIGs. 5A-B** illustrate simple line diagrams of an example high pivot rear suspension bicycle **500** in a certain gear (e.g., chain engaged on largest cog). The bicycle **500** includes a rear suspension axis **510** (main pivot point) that is higher than the rear suspension axis **140** of bicycle **100.** The axle path of the bicycle **500** is accordingly substantially rearward. An idler pulley (not illustrated) is located in close proximity to the high rear suspension axis **510.** The chain drive **152** is routed around a certain cog of the rear cassette (not illustrated or identified in simplified drawing) centered around the rear wheel axle **136,** the idler pulley located in close proximity to the high rear suspension axis **510,** the front chainring (not illustrated) centered around the crank axis **160** and the derailleur **162.** The actual components of the derailleur 162 are not illustrated for simplicity. Rather, they are simply illustrated as adjusting the path that the chain drive **152** travels.

**FIG. 5A** illustrates the bicycle **500** prior to any vertical rear wheel travel having a driveline angle **520** to provide appropriate tension to account for the gear selected (e.g., chain engaged on largest cog). **FIG. 5B** illustrates the bicycle **500** experiencing vertical rear wheel travel **530** and having a driveline angle **540** to provide appropriate tension to account for the gear selected and the vertical rear wheel travel **530.** The driveline angle **540** is greater than the driveline angle **520** as the vertical rear wheel travel **530** accounts for additional chain growth. The more vertical rear wheel travel that the bicycle **500** experiences, the more that the driveline angle increases.

The high pivot rear suspension bicycle **500** increases the chain growth that is experienced for vertical rear wheel travel. In addition, bicycles may utilize larger rear cassettes (more cogs) which increases the amount of chain growth. The derailleur **162** may have limits in the increase in the driveline angle that can be obtained and thus the chain growth accounted for. The derailleur cage cannot be extended indefinitely without posing mechanical and ground clearance/obstacle vulnerability issues. Accordingly, there is a maximum vertical rear wheel travel that can be obtained for different cogs (larger the cog the less vertical rear wheel travel and vice versa).

One solution to address the limitations in the amount of chain growth (caused by cog size and vertical rear wheel travel) that the derailleur **162** can handle is to route the untensioned span of the chain **152L** toward the tensioned span of the chain **152U** so as to be closer to the tensioned span of the chain **152U.** A routing pulley could be utilized to route the chain **152** in such a fashion. The use of the routing pulley to route the chain **152** in this fashion would reduce the amount of chain growth throughout the suspension travel. The closer the untensioned portion of chain **152L** is routed to the tensioned portion of the chain **152U,** the less chain growth that will be experienced for a specific vertical rear wheel travel and the more vertical real wheel travel that the derailleur **162** can handle. The routing pulley could be located in proximity to the high rear suspension axis **510** and the idler pulley.

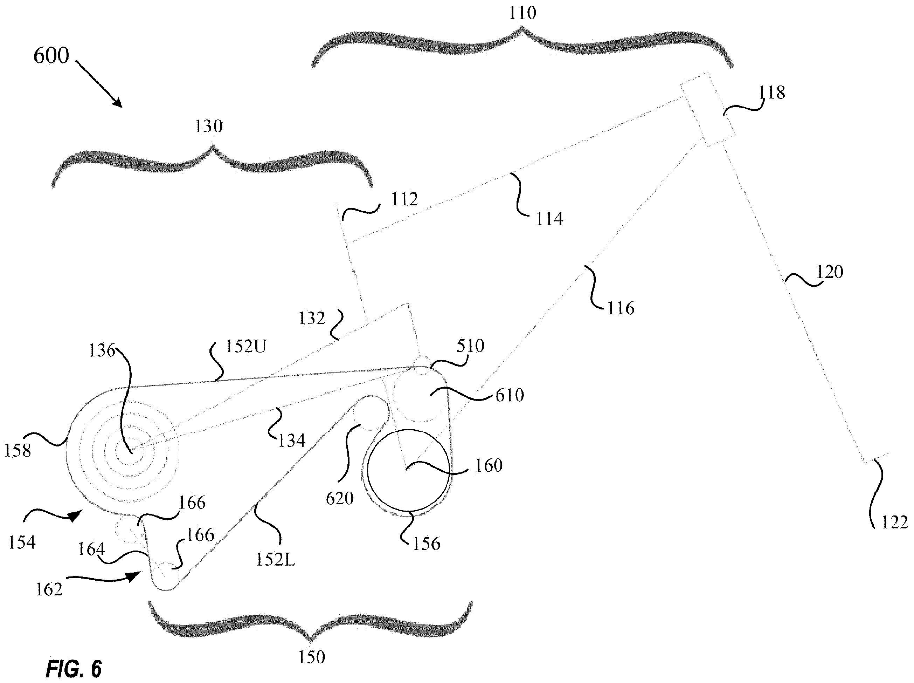

**FIG. 6** illustrates a line diagram of an example chain driven high pivot point rear suspension bicycle **600.** The bicycle **600** will use the same reference numbers to identify the same components discussed with regard to previous Figures and will not describe them below to avoid redundancy. The idler pulley **610** is located in close proximity to the high rear suspension axis **510.** The idler pulley **610** may be mounted to the front triangle **110** (e.g., the seat tube **112).** A routing pulley **620** is located above the front chainring **156** and behind the idler pulley **610.** The routing pulley **620** may be mounted to the front triangle **110** (e.g., the seat tube **112).** The drive train **150** of the bicycle **600** includes the chain drive **152,** the rear cassette **154,** the idler pulley **610,** the front chainring **156,** the routing pulley **620** and the derailleur **162.**

The chain drive **152** routes around the appropriate cog **158** of the rear cassette **154,** the idler pulley **610,** the front chainring **156,** the routing pulley **620,** the derailleur **162** and back to the appropriate cog **158** of the rear cassette **154.** The idler pulley **610** routes the upper (tensioned) portion of the chain drive **152U** to the front chainring **156** and the routing pulley **620** routes the lower (untensioned) portion of the chain drive **152L** towards the idler pulley **610** and the high pivot point **510** (closer to the tensioned chain drive **152U)** prior to routing to the derailleur **162.** Pedaling causes the rotation of the front chainring **156** which will in turn rotate the chain drive **152** which in turn will rotate the appropriate cog **158** of the rear cassette **154** and the rear wheel.

The use of the routing pulley **620** reduces the amount of chain growth throughout the suspension travel. Accordingly, the chain growth that the derailleur **162** is required to handle based on vertical rear wheel travel is reduced. The derailleur **162** will still adjust the driveline angle based on gear selected (e.g., larger driveline angle for larger cogs). However, the change from an initial driveline angle for no vertical rear wheel travel to a new driveline angle for encountering vertical rear wheel travel will be reduced.

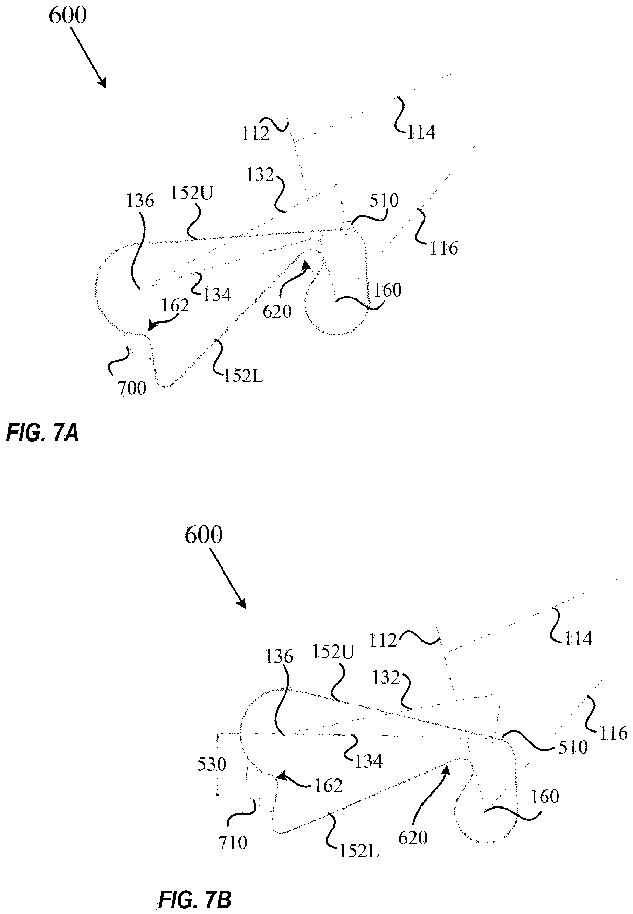

**FIGs. 7A-B** illustrate simple line diagrams of an example high pivot rear suspension bicycle **600** in the same gear (e.g., chain engaged on largest cog) as the bicycle **500** illustrated in **FIGs. 5A-B****.** The chain **152** is routed around the routing pulley **620** to reduce the chain growth. **FIG. 7A** illustrates the bicycle **600** prior to any vertical rear wheel travel and the derailleur **162** having a driveline angle **700.** **FIG. 7B** illustrates the bicycle **600** with the same vertical rear wheel travel **530** as **FIG. 5B****.** The derailleur **162** has a driveline angle **710** to account for the chain growth encountered from the vertical rear wheel travel **530.** The change between the initial driveline angle **700** associated with no vertical rear wheel travel **(****FIG. 7A****)** and the driveline angle **710** associated with the vertical rear wheel travel **530 (****FIG. 7B****)** is substantially less than the change between the initial driveline angle **520** associated with no vertical rear wheel travel **(****FIG. 5A****)** and the driveline angle **540** associated with the vertical rear wheel travel **530 (****FIG. 5B****).** The use of the routing pulley **620** reduced the change in the driveline angle required to account for the same vertical rear wheel travel **530.**

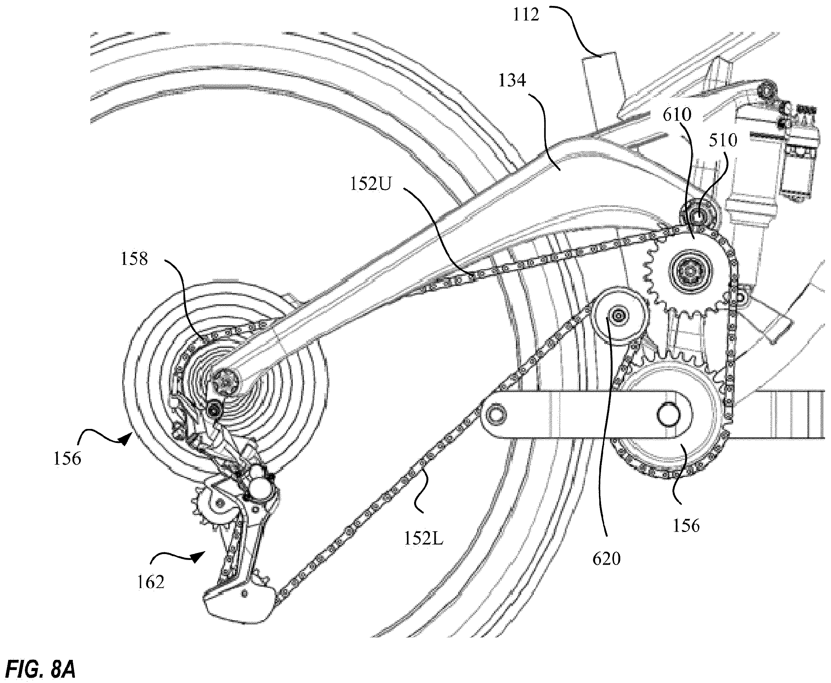

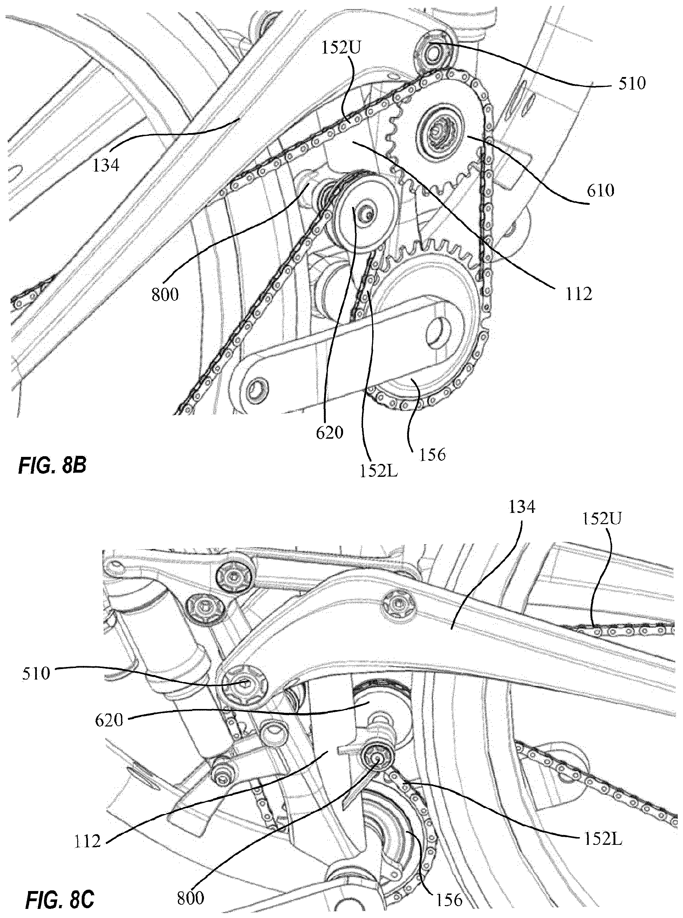

**FIGs. 8A-C** illustrate various different detailed views of a portion of a bicycle **600** showing the location of the idler pulley **610** and the routing pulley **620.** The idler pulley **610** and the routing pulley **620** may be mounted to the front triangle **110.** According to one embodiment, a bracket **800** extends from the seat tube **112** and the routing pulley **620** is secured to the bracket **800.** As can be seen the idler pulley **610** and the routing pulley **620** are located in proximity to each other and the routing pulley **620** clearly routes the untensioned portion of chain **152L** toward the idler pulley **610** and the high pivot point **510** to be closer to the tensioned portion of the chain **152U** on its return path to the derailleur **162.**

While the increase in chain growth created by low pivot rear suspension bicycles (e.g., bicycle **100)** is not as much as the increase in chain growth created by high pivot rear suspension bicycles (e.g., bicycles **500),** there still may be practical limits in the amount of chain growth (e.g., cog **size,** vertical rear wheel travel) that the derailleur **162** can accommodate.

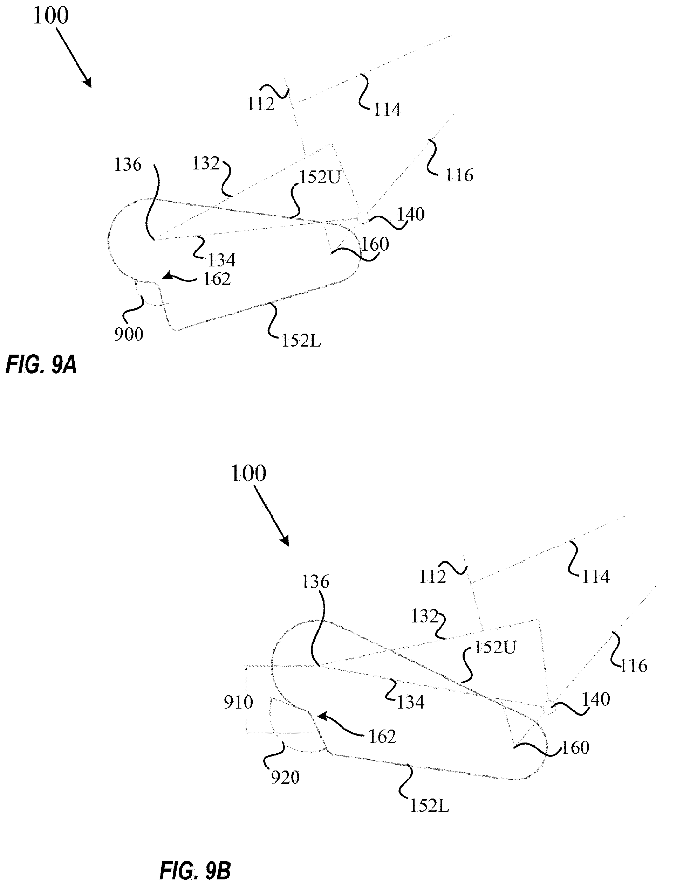

**FIGs. 9A-B** illustrate simple line diagrams of an example low pivot rear suspension bicycle **100** in a certain gear (e.g., chain engaged on largest cog, larger than illustrated in **FIGs. 3A-D****)** before and after experiencing vertical rear wheel travel. **FIG. 9A** illustrates the bicycle **100** prior to any vertical rear wheel travel having a driveline angle **900** to account for gear selected. **FIG. 9B** illustrates the bicycle **100** experiencing vertical rear wheel travel **910** and having a driveline angle **920** to account for the gear selected and the vertical rear wheel travel **910.** The driveline angle **920** is greater than the driveline angle **900** as the vertical rear wheel travel **910** accounts for additional chain. The more vertical rear wheel travel that the bicycle **100** experiences, the more that the driveline angle increases. While not illustrated in **FIGs. 9A-B****,** it follows that the larger the cog size of the rear wheel cassette **154** the larger the driveline angle (as was previously illustrated in **FIGs. 3A-D****).**

The use of a routing pulley in conjunction with a derailleur is not limited to use with high pivot rear suspension bicycles. Rather, this configuration could also be utilized for low pivot rear suspension bicycles as well. Such use would reduce the amount of chain growth caused by vertical rear wheel suspension and thus enable the driveline angle required to be reduced. Accordingly, a standard derailleur could provide the driveline angle required for larger sprockets on a cassette to be provided. Alternatively, the derailleur cage length could possibly be reduced, improving ground clearance.

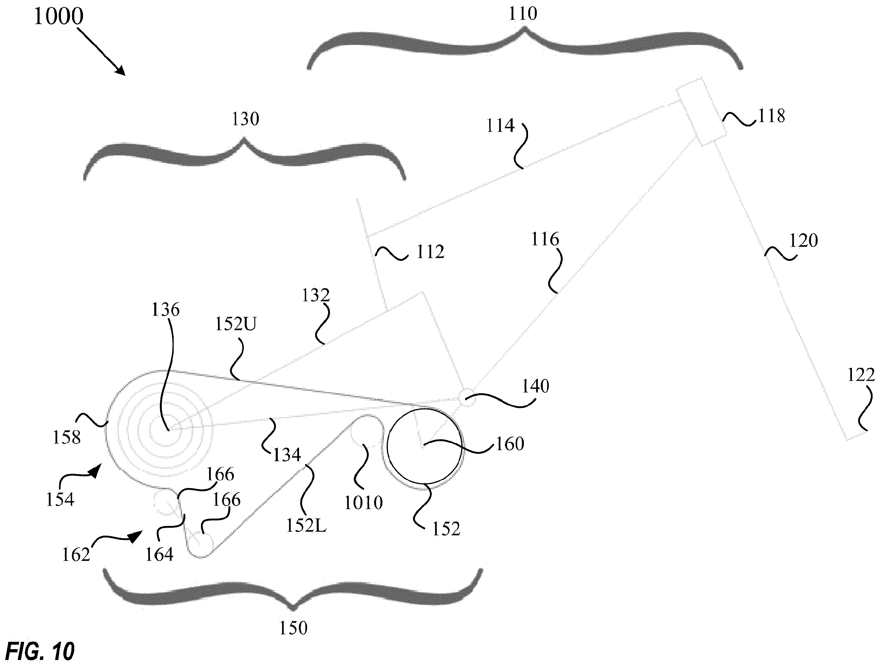

**FIG. 10** illustrates a line diagram of an example chain driven low pivot point rear suspension bicycle **1000.** The bicycle **1000** will use the same reference numbers to identify the same components discussed with regard to previous Figures and will not describe them below to avoid redundancy. A routing pulley **1010** is located above and behind the front chainring **156** in order to route the untensioned portion of the chain **152L** to the tensioned portion of the chain **152U.** The routing pulley **1010** may be mounted to the front triangle **110** (e.g., the seat tube **112).** The drive train **150** of the bicycle **1000** includes the chain drive **152,** the rear cassette **154,** the front chainring **156,** the routing pulley **1010** and the derailleur **162.** The chain drive **152** routes around the appropriate cog **158 of** the rear cassette **154,** the front chainring **156,** the routing pulley **1010,** the derailleur **162** and back to the appropriate cog **158** of the rear cassette **154.** Pedaling causes the rotation of the front chainring **156** which will in turn rotate the chain drive **152** which in turn will rotate the appropriate cog **158** of the rear cassette **154** and the rear wheel.

The use of the routing pulley **1010** reduces the amount of chain growth throughout the suspension travel. Accordingly, the chain growth that the derailleur **162** is required to handle based on vertical rear wheel travel is reduced. The derailleur **162** will still adjust the driveline angle based on gear selected (e.g., larger driveline angle for larger cogs). However, the change from an initial driveline angle for no vertical rear wheel travel to a new driveline angle for encountering vertical rear wheel travel will be reduced.

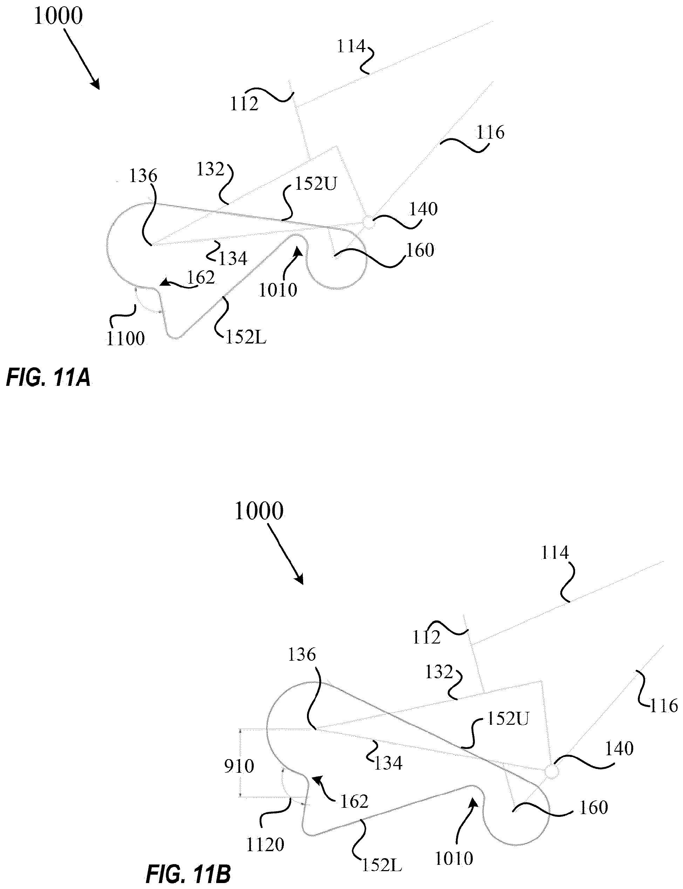

**FIGs. 11A-B** illustrate simple line diagrams of an example low pivot rear suspension bicycle **1000** in the same gear (e.g., chain engaged on largest cog) as the bicycle **100** illustrated in **FIGs. 9A-B****.** **FIG. 11A** illustrates the bicycle **1000** in the same gear but utilizing the routing pulley **1010** to route the chain **152** upwards at that point. **FIG. 11B** illustrates the bicycle **1000** in the same gear and with the same vertical rear wheel travel **910** but utilizing the routing pulley **1010** to route the chain **152** upwards. The change between the initial driveline angle **1100** associated with no vertical rear wheel travel **(****FIG. 11A****)** and the driveline angle **1120** associated with the vertical rear wheel travel 910 **(****FIG. 11B****)** is substantially less than the change between the initial driveline angle **900** associated with no vertical rear wheel travel **(****FIG. 9A****)** and the driveline angle **920** associated with the vertical rear wheel travel **910 (****FIG. 9B****).**

Although the invention has been illustrated by reference to specific embodiments, it will be apparent that the invention is not limited thereto as various changes and modifications may be made thereto without departing from the scope. Reference to "one embodiment" or "an embodiment" means that a particular feature, structure or characteristic described therein is included in at least one embodiment. Thus, the appearances of the phrase "in one embodiment" or "in an embodiment" appearing in various places throughout the specification are not necessarily all referring to the same embodiment.

## Claims

1. A rear suspension bicycle comprising
a frame including a front triangle (110) and a swingarm (130);
a rear suspension pivot point (140, 510) between the front triangle and the swingarm; and
a drive train (150) including a chain drive (152), a rear cassette (154) having a plurality of cogs located at a rear wheel axis, a front chainring (156) located at a crank axis (160), a routing pulley (620, 1010) and a derailleur (162) located in proximity to the rear cassette (154), wherein the chain drive (152) traverses from the rear cassette (154) to the front chainring (156), from the front chainring (156) to the routing pulley (620, 1010), from the routing pulley (620, 1010) to the derailleur (162), and from the derailleur (162) back to the rear cassette (154), wherein the derailleur (162) is to provide different driveline angles (700, 710, 1100, 1120) based on chain growth of the chain drive (152) caused by the cog (158) of the rear cassette (154) selected and vertical rear wheel travel (530, 910) of the bicycle.

2. The bicycle of claim 1, wherein the routing pulley (1010) is located behind and above the front chainring (156) and is to route an untensioned portion of the chain drive (152) toward a tensioned portion of the chain drive (152) in order to reduce chain growth in the chain drive (152).

3. The bicycle of claim 1, wherein
location of the rear suspension pivot point (510) provides a predominantly rearward axle path; the drive train (150) further includes an idler pulley (610) located in close proximity to the rear suspension pivot point (510); and
the chain drive (152) traverses from the rear cassette (154) to the idler pulley (610) and from the idler pulley (610) to the front chainring (156).

4. The bicycle of claim 3, wherein the routing pulley (620) is located in proximity to the idler puller (610) and routes an untensioned portion of the chain drive (152) toward a tensioned portion of the chain drive (152) in order to reduce chain growth in the chain drive (152).

5. The bicycle of any of claims 1-3, wherein the routing pulley (620, 1010) is mounted to the front triangle (110).

6. The bicycle of any of claims 1-3, wherein the routing pulley (620, 1010) is mounted to a seat tube (112) of the front triangle (110).

7. The bicycle of claim 6, wherein the seat tube (112) includes a bracket (800) extending therefrom and the routing pulley (620) is mounted to the bracket (800).

8. The bicycle of claim 3, wherein the idler pulley (620) is mounted to the front triangle (110).

9. The bicycle of any of claims 1-3, wherein the driveline angle provided by the derailleur (162) increases as the chain growth increases.

10. The bicycle of any of claims 1-3, wherein the driveline angle provided by the derailleur (162) increases as the vertical rear wheel travel increases.

11. The bicycle of any of claims 1-3, wherein the driveline angle provided by the derailleur (162) increases as size of cog (158) of the rear cassette (154) utilized for gear ratio of the bicycle increases.

12. The bicycle of any of claims 1-3, wherein the derailleur (162) includes a rotating member (164) having a pulley (166) mounted on each side thereof and the rotating member (164) and the pulleys (166) are rotated based on the amount of chain growth.

13. The bicycle of claim 12, wherein the derailleur (162) is secured to the swingarm (130) in close proximity to the rear cassette (154).

14. The bicycle of claim 12, wherein the
derailleur (162) further includes a spring;
the tension on the chain drive (152) caused by increasing chain growth causes the rotating member (164) and the pulleys (166) to rotate in a first direction to increase the driveline angle; and
the spring causes the rotating member (164) and the pulleys (166) to rotate in a second direction to provide appropriate tension to the chain drive (152) and reduce the driveline angle when the chain growth decreases.

15. The bicycle of any of claims 1-3, further comprising an electric motor.
